(19) **Europäisches Patentamt**

**European Patent Office**

**Office européen des brevets**

(11) **EP 1 012 616 B1**

(12) **EUROPÄISCHE PATENTSCHRIFT**

(45) Veröffentlichungstag und Bekanntmachung des Hinweises auf die Patenterteilung:
**24.04.2002 Patentblatt 2002/17**

(51) Int Cl.⁷: **G01R 31/327**

(21) Anmeldenummer: **98954163.6**

(22) Anmeldetag: **04.09.1998**

(86) Internationale Anmeldenummer:
**PCT/DE98/02692**

(87) Internationale Veröffentlichungsnummer:
**WO 99/13350 (18.03.1999 Gazette 1999/11)**

(54) **VERFAHREN UND ANORDNUNG ZUM TESTEN VON DIGITALEN SCHUTZANORDNUNGEN**

METHOD AND CONFIGURATION FOR TESTING DIGITAL PROTECTION DEVICES

PROCEDE ET CONFIGURATION PERMETTANT DE TESTER DES DISPOSITIFS DE PROTECTION NUMERIQUES

(84) Benannte Vertragsstaaten:
**AT DE NL**

(30) Priorität: **10.09.1997 DE 19740425**

(43) Veröffentlichungstag der Anmeldung:
**28.06.2000 Patentblatt 2000/26**

(73) Patentinhaber: **SIEMENS AKTIENGESELLSCHAFT 80333 München (DE)**

(72) Erfinder:
• **KAISER, Steffen D-10407 Berlin (DE)**
• **WINTER, Wilhelm D-91054 Erlangen (DE)**

(56) Entgegenhaltungen:
**DD-A- 150 947**

• **PATENT ABSTRACTS OF JAPAN vol. 017, no. 473 (E-1423), 27. August 1993 & JP 05 111141 A (TOKYO GAS CO LTD;OTHERS: 01), 30. April 1993**

**Beschreibung**

Die Erfindung bezieht sich auf ein Verfahren zum Testen von digitalen Schutzanordnungen, bei dem datenverarbeitungstechnisch ein Energieversorgungsnetz hinsichtlich seines Stromund Spannungsverhaltens unter taktweisem Ausgeben von digitalen tromund Spannungssignalen nachgebildet wird, aus den digitalen Strom- und Spannungssignalen entsprechende Ströme und Spannungen gebildet und einer zu testenden Schutzanordnung zugeführt werden und Auslösesignale der jeweiligen Schutzanordnung erfaßt werden.

Ein Verfahren dieser Art ergibt sich ohne weiteres aus "Elektrizitätswirtschaft", Jg. 78 (1979), Heft 1, Seiten 18 bis 23. Bei einem solchen Verfahren werden von einer Datenverarbeitungsanlage taktweise digitale Strom- und Spannungssignale in Anlehnung an die Strom- und Spannungsverhältnisse abgegeben, wie sie in einem Energieversorgungsnetz vorhanden sind; es wird von der Datenverarbeitungsanlage also ein Netzmodell gebildet. Aus den digitalen Strom- und Spannungssignalen lassen sich entsprechende Ströme und Spannungen bilden und einer zu testenden Schutzanordnung zuführen. Werden einem Fehler in dem nachgebildeten Energieversorgungsnetz entsprechende Ströme und Spannungen an die jeweils zu testende Schutzanordnung angelegt, dann erzeugt diese ein Auslösesignal. Das Auftreten des Auslösesignals kann den jeweiligen Strömen und Spannungen zugeordnet werden, und damit können Rückschlüsse auf das Auslöseverhalten der zu testenden Schutzanordnung gezogen werden.

Um das Testen von den digitalen Schutzanordnungen möglichst realitätsnah durchführen zu können, ist es zweckmäßig, beim Erfassen eines Auslösesignals die das Energieversorgungsnetz nachbildende und ein Netzmodell darstellende Datenverarbeitungsanlage so zu steuern, daß sie auch netzfehlerspezifische digitale Strom- und Spannungssignale ausgibt. Da hierzu längere Rechenzeiten benötigt werden als zum Erzeugen von einen normalen, kontinuierlichen Verlauf von Strömen und Spannungen angebenden digitalen Stromund Spannungssignalen, könnte man daran denken, eine sehr schnell arbeitende Datenverarbeitungsanlage einzusetzen und diese beim Auftreten eines Auslösesignals der zu testenden Schutzeinrichtung zur Ausgabe von netzfehlerspezifischen digitalen Stromund Spannungssignalen zu veranlassen. Eine derartige Datenverarbeitungsanlage ist aber sehr aufwendig und daher sehr kostspielig in ihrer Herstellung bzw. Anschaffung.

Der Erfindung liegt die Aufgabe zugrunde, ein Verfahren zum Testen von digitalen Schutzanordnungen anzugeben, bei dem mit einer herkömmlichen Datenverarbeitungsanlage, wie z. B. einem Personalcomputer, digitale Schutzanordnungen realitätsnah auch mit netzfehlerspezifischen digitalen Strom- und Spannungssignalen einer solchen Datenverarbeitungsanlage testbar sind.

Zur Lösung dieser Aufgabe werden bei einem Verfahren der eingangs angegebenen Art erfindungsgemäß zu Beginn des Testens einer Schutzanordnung die ausgegebenen digitalen Strom- und Spannungssignale nacheinander zunächst zwischengespeichert, und es werden nach Erreichen eines vorgegebenen Bestandes an zwischengespeicherten digitalen Strom- und Spannungssignalen taktweise die jeweils ältesten zwischengespeicherten digitalen Strom- und Spannungssignale ausgelesen und der zu testenden Schutzanordnung zugeführt und jüngere ausgegebene digitale Strom- und Spannungssignale nachzwischengespeichert; beim Auftreten eines Auslösesignals werden datenverarbeitungstechnisch netzfehlerspezifische digitale Strom- und Spannungssignale ausgegeben und weiterhin die jeweils ältesten zwischengespeicherten digitalen Strom- und Spannungssignale taktweise ausgelesen und die netzfehlerspezifischen digitalen Strom- und Spannungssignale jeweils nach ihrem Ausgeben nachzwischengespeichert.

Es ist zwar aus der deutschen Patentschrift DD 150 947 ein Verfahren zur rechnergestützten Prüfung von Schutzanordnungen bekannt, bei dem mit beispielsweise digitalen Modellen nachgebildete nichtstationäre Vorgänge gespeichert und die gespeicherten Daten in bestimmter Reihenfolge auf den Prüfling gegeben werden, jedoch werden die Daten vor dem Tasten der Schutzanordnung vollständig aufgenommen; zum Testen eines Prüflings werden die Daten in bestimmter Folge auf den Prüfling gegeben und dessen Signalreaktion erfaßt.

Ein wesentlicher Vorteil des erfindungsgemäßen Verfahrens besteht darin, daß es mit einer vergleichsweise einfach ausgestalteten Datenverarbeitungsanlage in Form eines herkömmlichen Personalcomputers auskommt. Dies ist darauf zurückzuführen, daß bei dem anmeldungsgemäßen Verfahren die von der Datenverarbeitungsanlage ausgegebenen digitalen Strom- und Spannungssignale nacheinander zunächst zwischengespeichert werden, bis ein vorgegebener Bestand an zwischengespeicherten digitalen Strom- und Spannungssignalen erreicht ist. Die zwischengespeicherten Signale werden taktweise während des Testvorganges ausgelesen. Dies gilt auch dann, wenn ein Auslösesignal erzeugt wird. Allerdings wird beim Auftreten des Auslösesignals die Datenverarbeitungsanlage zur Ausgabe von netzfehlerspezifischen digitalen Strom- und Spannungssignalen veranlaßt, was wegen des komplizierteren Rechenvorganges zu einer höheren Rechenzeit als bei einem simulierten ungestörten Netzzustand führt. Die netzfehlerspezifischen digitalen Strom- und Spannungssignale werden auch zwischengespeichert. Es wird somit der Bestand an digitalen Strom- und Spannungssignalen nachgefüllt. Die an sich zu geringe Rechengeschwindigkeit der eingesetzten verhältnismäßig einfachen Datenverarbeitungsanlage wird also gewissermaßen durch die Zwischenspeicherung überspielt.

Die Erfindung macht sich den Umstand zunutze, daß im Einsatzfalle einer Schutzanordnung das von dieser bei einem Fehler im zu überwachenden Netz erzeugte Auslösesignal zwar sofort einen Schalter, in der Regel einen Leistungsschalter, beaufschlagt, daß aber der insoweit beaufschlagte Leistungsschalter nicht sofort seine Kontakte öffnet, sondern dazu eine sogenannte Schaltereigenzeit benötigt, die etwa zwischen 20 und 100 ms - häufig bei 60 ms - liegt. Erst nach Ablauf der Schaltereigenzeit ergeben sich also in der Wirklichkeit neue Strom- und Spannungsverhältnisse im Netz, die auch beim Testen einer digitalen Schutzanordnung mit dem erfindungsgemäßen Verfahren berücksichtigt werden sollen.

Im Hinblick auf diesen Sachverhalt wird es bei dem erfindungsgemäßen Verfahren als vorteilhaft angesehen, wenn der vorgegebene Bestand an taktweise zwischengespeicherten digitalen Strom- und Spannungssignalen unter Berücksichtigung der Taktdauer im Hinblick auf die Eigenzeit von Schaltern bestimmt wird, bei denen die zu testenden Schutzanordnungen in Einsatz kommen sollen. Auf diese Weise ist bei dem erfindungsgemäßen Verfahren sichergestellt, daß - wie in der Wirklichkeit - nach Ablauf der Schaltereigenzeit den geänderten Netzverhältnissen entsprechend digitale Strom- und Spannungssignale ausgegeben werden, die netzfehlerspezifisch sind.

Bei dem erfindungsgemäßen Verfahren kann das Auslesen der zwischengespeicherten digitalen Strom- und Spannungssignale in einem zeitlichen Abstand vorgenommen werden, der der zum Ausgeben jeweils weiterer digitaler Strom- und Spannungssignale erforderlichen Zeitdauer bei auslösesignalfreiem Testzustand entspricht.

Bei einer anderen Ausführungsform des erfindungsgemäßen Verfahrens wird das Auslesen der zwischengespeicherten digitalen Strom- und Spannungssignale in einem zeitlichen Abstand vorgenommen, der größer als die zum Ausgeben jeweils weiterer digitaler Strom- und Spannungssignale erforderliche Zeitdauer bei auslösesignalfreiem Testzustand ist.

Die Erfindung bezieht sich ferner auf eine Anordnung zum Testen mit einer Datenverarbeitungsanlage, die als ein Netzmodell ein Energieversorgungsnetz hinsichtlich seines Strom- und Spannungsverhaltens unter taktweisem Ausgeben von digitalen Strom- und Spannungssignalen nachbildet, und mit einer der Datenverarbeitungsanlage nachgeordneten Umsetzer-Einrichtung, die aus den digitalen Strom- und Spannungssignalen entsprechende Ströme und Spannungen bildet und einer zu testenden Schutzanordnung zuführt.

Eine derartige Anordnung ergibt sich ebenfalls ohne weiteres aus der oben angegebenen Literaturstelle. Um eine derartige Anordnung so weiterzuentwickeln, daß sie bei relativ geringem Bedarf an Rechnerleistung nach dem Erzeugen eines Auslösesignals auch netzfehlerspezifische digitale Strom- und Spannungssignale berücksichtigen kann, ist erfindungsgemäß der Datenverarbeitungsanlage ein Zwischenspeicher zugeordnet, in den die ausgegebenen digitalen Strom- und Spannungssignale nacheinander zunächst zwischengespeichert werden; eine Auslösesignale der Schutzanordnung erfassende Aufnahmeanordnung ist ausgangsseitig mit der Datenverarbeitungsanlage verbunden.

Von einer bekannten Anordnung nach der deutschen Patentschrift DD 150 947 unterscheidet sich die erfindungsgemäße Anordnung dadurch, daß sie als Speicher einen Zwischenspeicher aufweist, in den während des Testens Daten eingelesen und aus dem während des Testens Daten ausgelesen werden; ein weiterer Unterschied besteht in dem Vorsehen einer Aufnahmeanordnung, die die Datenverarbeitungsanlage bei einem Auslösesignal der zu testenden Schutzanordnung so ansteuert, daß sie netzfehlerspezifische Daten an den Zwischenspeicher abgibt.

Ein wesentlicher Vorteil der erfindungsgemäßen Anordnung wird darin gesehen, daß sie mit einer Datenverarbeitungsanlage in Form eines herkömmlichen Personalcomputers auskommt und daher vergleichsweise kostengünstig hergestellt werden kann; der zusätzliche Aufwand für die Zwischenspeicher ist dabei vergleichsweise gering. Ein weiterer Vorteil besteht darin, daß auf schaltungstechnisch einfache Weise das Testen nach einem Auslösesignal auch mit netzfehlerspezifischen Strom- und Spannungssignalen durchführbar ist.

Bei der erfindungsgemäßen Anordnung weist der Zwischenspeicher vorteilhafterweise eine solche Speicherkapazität auf daß alle während einer der Eigenzeit von für das Zusammenwirken mit der zu testenden Schutzanordnung vorgesehenen Schaltern entsprechenden Zeitdauer bei auslösesignalfreiem Testzustand ausgegebenen Strom- und Spannungssignale zwischenspeicherbar sind.

Der Zwischenspeicher ist vorteilhafterweise ein Ringpuffer, d. h. ein Puffer, in dem für bereits ausgegebene Strom- und Spannungssignale von der Datenverarbeitungsanlage neue Daten gespeichert werden.

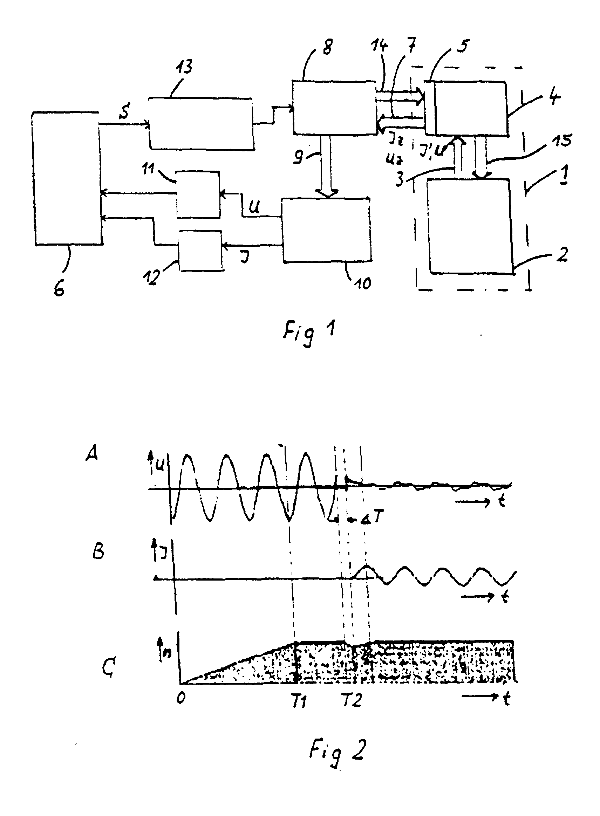

Zur weiteren Erläuterung der Erfindung ist in Figur 1 ein Blockschaltbild zur Erläuterung eines Ausführungsbeispiels des erfindungsgemäßen Verfahrens und in Figur 2 mittels dreier Diagramme die Wirkung des Zwischenspeichers des Blockschaltbildes veranschaulicht.

Die Figur 1 zeigt als Block eine Datenverarbeitungsanlage 1, die von einem herkömmlichen Personalcomputer gebildet ist. Die Datenverarbeitungsanlage 1 enthält ein Netzwerk-Modell 2, das von dem Simulationsprogramm NETOMAC gebildet sein kann, das in der eingangs angegebenen Literaturstelle im einzelnen beschrieben ist. Von dem Netzwerk-Modell 2 werden über einen Bus 3 digitale Strom- und Spannungssignale J' bzw. U' in Anlehnung an das Verhalten eines zu simulierenden Energieversorgungsnetzes ausgegeben. Diese digitalen Strom- und Spannungswerte I' bzw. U' werden in einem Interface-Baustein 4 weiterverarbeitet, der auch zur systeminternen Kommunikation eingesetzt wird. Der Interface-Baustein 4 ist mit einem Zwischenspeicher in Form eines Ringpuffers 5 versehen, in dem eine vorgegebene Anzahl ausgegebener digitaler Strom- und Spannungssignale J' bzw. U' zwischengespeichert werden. Beim Beginn des Testvorganges einer digitalen Schutzanordnung 6 werden taktweise, d. h. im Systemtakt, von dem Netzwerk-Modell 2 abgegebene digitale Strom- und Spannungssignale J' und U' zunächst in dem Ringpuffer 5 zwischengespeichert. Die Speicherkapazität dieses Ringpuffers 5 ist dabei im Hinblick auf den Systemtakt so gewählt, daß er gefüllt ist, nachdem eine Zeitdauer verstrichen ist, die der Eigenzeit Tls nicht dargestellter Schalter entspricht, bei denen die zu testende Schutzanordnung 6 eingesetzt werden soll.

Ist nach dem Start des Testvorganges eine solche Zeitdauer Tls abgelaufen, dann wird mit dem nächsten Takt des Systems aus dem Ringpuffer 5 ein zwischengespeicherter Wert des Strom- und Spannungssignals Jz bzw. Uz ausgelesen und über einen Bus 7 an einen weiteren Interface-Baustein 8 übertragen, von dem über einen zusätzlichen Bus 9 ein Digital-Analog-Umsetzer 10 beaufschlagt ist. In diesem Digital-Analog-Umsetzer 10 werden den jeweils übertragenen digitalen Stromund Spannungswerten entsprechende Ströme J bzw. Spannungen U gebildet und über Verstärker 11 und 12 der zu testenden Schutzanordnung 6 zugeführt. Im Diagramm A der Figur 2 ist der Verlauf der so erzeugten Spannung U über der Zeit t dargestellt. Ebenso über der Zeit ist im Diagramm B der erzeugte Strom J wiedergegeben, der nur wegen des gewählten Maßstabes zunächst scheinbar den Wert Null aufweist. Das Diagramm C der Figur 2 zeigt die Anzahl n der gespeicherten digitalen Stromund Spannungswerte im Ringpuffer 5 über der Zeit t. Es ist zu erkennen, daß bis zu einem Zeitpunkt T1 nach dem Beginn des Testvorganges zum Zeitpunkt Null zunächst nur der Ringpuffer 5 mit den digitalen Strom- und Spannungswerten aufgefüllt wird. Nach dem Zeitpunkt T1 werden taktweise jeweils soviel Daten in den Ringspeicher eingegeben wie jeweils ausgelesen werden. Das bedeutet, daß die Zahl n der gespeicherten Daten nach dem Zeitpunkt T1 gleich groß bleibt.

Bei dem dargestellten Beispiel ist angenommen, daß zum Zeitpunkt T2 von der zu testenden Schutzanordnung 6 infolge der ihr zugeführten Strom- und Spannungswerte J und U ein Auslösesignal S ausgegeben wird. Dieses Auslösesignal S wird von einer Aufnahmeanordnung 13 erfaßt und über den weiteren Interface-Baustein 8 an den einen Interface-Baustein 4 über einen Bus 14 gegeben. Von dem einen Interface-Baustein 4 wird daraufhin über einen Bus 15 das Netzwerk-Modell 2 zur Ausgabe von digitalen Strom- und Spannungssignalen veranlaßt, die netzfehlerspezifisch sind, d. h. bei einem Kurzschluß in dem nachgebildeten Netz auftreten würden. Wie die Diagramme A und B der Figur 2 zeigen, treten dabei während eines Zeitraumes ΔT Unstetigkeitsstellen auf, deren Berechnung im Netzwerk-Modell 2 einen relativ hohen Rechen- und damit auch einen relativ hohen Zeitaufwand erfordert, so daß die Ausgabe dieser netzfehlerspezifischen digitalen Strom- und Spannungssignale relativ langsam erfolgt. Da aus dem Ringpuffer 5 nach wie vor taktweise die zwischengespeicherten digitalen Stromund Spannungswerte ausgelesen werden, aber nicht mit derselben Geschwindigkeit netzfehlerspezifische digitale Stromund Spannungswerte vom Netzwerk-Modell 2 erzeugt werden, nimmt der Bestand an zwischengespeicherten Daten im Ringpuffer 5 vom Zeitpunkt T2 an ab, wie das Diagramm C der Figur 2 deutlich zeigt.

Nimmt man an, daß die Ausgabe der digitalen Strom- und Spannungssignale J' und U' des Netzwerk-Modells in einem zeitlichen Abstand Δt erfolgt, der gleich der benötigten Rechendauer tmin ist, wenn ein Auslösesignal S nicht aufgetreten und eine Unstetigkeitsstelle nicht vorhanden ist, dann kann der Ringpuffer 5 nicht wieder vollständig aufgefüllt werden. Berücksichtigt man jedoch, daß die Rechenzeit des Netzwerk-Modells 2 nach einem Auslösesignal tmax beträgt, dann ergibt sich, daß bei der Eigenzeit Tls der Schalter während einer Simulation Tls/(tmax-tmin) Unstetigkeitsstellen auftreten können, bis der Puffer leergelaufen ist. Nimmt man typische Werte für tmax=1ms, tmin=0,5ms und Tls=60ms an, dann können 120 Unstetigkeitsstellen bei der Simulation auftreten, bis von dem Ringpuffer 5 keine Ausgangsdaten mehr zur Verfügung gestellt werden können. In der Praxis ist dies völlig ausreichend.

In dem dargestellten Beispiel ist angenommen, daß der zeitliche Abstand Δt größer als die benötigte Rechendauer tmin des Netzwerk-Modells 2 vor dem Auftreten eines Auslösesignals S ist, Δt>tmin gilt. Die Füllzeit tf des Ringpuffers 5 kann dann gemäß folgender Beziehung ermittelt werden

$$tf = \left( \frac{t\max - F \cdot t\min}{F-1} \right) \cdot F$$

in der F=Δt/tmin bedeutet. Mit den obigen beispielhaften Annahmen ergibt sich dann eine Füllzeit tf von rd. 5ms. Dies bedeutet, daß 5ms lang Simulationen ohne Unstetigkeitsstellen ausreichen, den Zeitverlust bei der Unstetigkeitsstellenberechnung aufzuholen und den Ringpuffer 5 wieder voll aufzufüllen. Die Leistungssteigerung des Systems beträgt in diesem Falle 90 %. Es können, wie die Figur C deutlich zeigt, in diesem Falle praktisch unendlich lange Simulationen durchgeführt werden, da niemals eine solch hohe Anzahl von Schalthandlungen der Schalter in einem kurzen Zeitabschnitt erfolgt, daß der Puffer 5 leerlaufen könnte.

**Patentansprüche**

1. Verfahren zum Testen von digitalen Schutzanordnungen, bei dem

   - datenverarbeitungstechnisch ein Energieversorgungsnetz hinsichtlich seines Strom- und Spannungsverhaltens unter taktweisem Ausgeben von digitalen Strom- und Spannungssignalen (J', U') nachgebildet wird,
   - aus den digitalen Strom- und Spannungssignalen (J', U') entsprechende Ströme (J) und Spannungen (U) gebildet und einer zu testenden Schutzanordnung (6) zugeführt werden und
   - Auslösesignale (S) der Schutzanordnung (6) erfaßt werden,

   **dadurch gekennzeichnet, daß**

   - zu Beginn des Testens einer Schutzanordnung (6) die ausgegebenen digitalen Strom- und Spannungssignale (J', U') nacheinander zunächst zwischengespeichert werden,
   - nach Erreichen eines vorgegebenen Bestandes an zwischengespeicherten digitalen Strom- und Spannungssignalen (Jz, Uz) taktweise die jeweils ältesten zwischengespeicherten digitalen Strom- und Spannungssignale (Jz, Uz) ausgelesen und der zu testenden Schutzanordnung (6) zugeführt werden und jüngere ausgegebene digitale Strom- und Spannungssignale (J', U') nachzwischengespeichert werden und
   - beim Auftreten eines Auslösesignals (S) datenverarbeitungstechnisch netzfehlerspezifische digitale Strom- und Spannungssignale (J', U') ausgegeben werden und weiterhin die jeweils ältesten zwischengespeicherten digitalen Strom- und Spannungssignale (Jz, Uz) taktweise ausgelesen und die netzfehlerspezifischen digitalen Strom- und Spannungssignale (J', U') jeweils nach ihrem Ausgeben zwischengespeichert werden.

2. Verfahren nach Anspruch 1,
   **dadurch gekennzeichnet, daß**

   - der vorgegebene Bestand an taktweise zwischengespeicherten digitalen Strom- und Spannungssignalen (Jz, Uz) unter Berücksichtigung der Taktdauer im Hinblick auf die Eigenzeit (Tls) von Schaltern bestimmt wird, bei denen die zu testenden Schutzanordnungen (6) in Einsatz kommen sollen.

3. Verfahren nach Anspruch 1 oder 2,
   **dadurch gekennzeichnet, daß**

   - das Auslesen der zwischengespeicherten digitalen Strom- und Spannungssignale (Iz, Uz) in einem zeitlichen Abstand ($\Delta$t) vorgenommen wird, der der zum Ausgeben jeweils weiterer digitaler Strom- und Spannungssignale (J', U') erforderlichen Zeitdauer bei auslösesignalfreiem Testzustand entspricht.

4. Verfahren nach Anspruch 1 oder 2,
   **dadurch gekennzeichnet, daß**

   - das Auslesen der zwischengespeicherten digitalen Strom- und Spannungssignale (Jz, Uz) in einem zeitlichen Abstand ($\Delta$t) vorgenommen wird, der größer als die zum Ausgeben jeweils weiterer digitaler Strom- und Spannungssignale (J', U') erforderliche Zeitdauer bei auslösesignalfreiem Testzustand ist.

5. Anordnung zum Testen von digitalen Schutzanordnungen mit

   - einer Datenverarbeitungsanlage (1), die als ein Netzmodell ein Energieversorgungsnetz hinsichtlich seines Strom- und Spannungsverhaltens unter taktweisem Ausgeben von digitalen Strom- und Spannungssignalen (J', U') nachbildet und
   - einer der Datenverarbeitungsanlage (1) nachgeordneten Umsetzer-Einrichtung (10), die aus den digitalen Strom- und Spannungssignalen (J', U') entsprechende Ströme und Spannungen (J, U) bildet und einer zu testenden Schutzanordnung (6) zuführt,

   **dadurch gekennzeichnet, daß**

   - der Datenverarbeitungsanlage (1) ein Zwischenspeicher (5) zugeordnet ist, in dem während des Testvorgangs die ausgegebenen digitalen Strom- und Spannungssignale (J', U') nacheinander zunächst zwischengespeichert werden und
   - nach Erreichen eines vorgegebenen Bestandes an zwischengespeicherten digitalen Strom- und Spannungssignalen (Jz, Uz) taktweise die jeweils ältesten zwischengespeicherten digitalen Strom- und Spannungssignale (Jz, Uz) ausgelesen und der zu testenden Schutzanordnung (6) zugeführt werden und jüngere ausgegebene digitale Strom- und Spannungssignale (J', U') nachzwischengespeichert werden und
   - der zu testenden Schutzanordnung (6)eine Aufnahmeanordnung (13) zugeordnet ist, die beim Auftreten eines Auslösesignals (S) der zu testenden Schutzanordnung (6) die Datenverarbeitungsanlage (1) zur Abgabe netzfehlerspezifischer digitaler Strom- und Spannungssignale (I', U') veranlaßt.

6. Anordnung nach Anspruch 5,
   **dadurch gekennzeichnet, daß**

   - der Zwischenspeicher (5) eine solche Speicherkapazität aufweist, daß alle während einer der Eigenzeit (Tls) von für das Zusammenwirken mit der zu testenden Schutzanordnung (6) vorgesehenen Schaltern entsprechenden Zeitdauer bei auslösesignalfreiem Testzustand ausgegebenen Strom- und Spannungssignale (J', U') zwischenspeicherbar sind.

7. Anordnung nach Anspruch 5 oder 6,
   **dadurch gekennzeichnet, daß**

   - der Zwischenspeicher ein Ringpuffer (5) ist.

## Claims

1. Method for testing digital protection arrangements, in which

   - data processing techniques are used to model the current and voltage response of a power supply network, with digital current and voltage signals (J', U') being output on a cyclic basis,
   - corresponding currents (J) and voltages (U) are formed from the digital current and voltage signals (J', U') and are supplied to a protection arrangement (6) to be tested, and
   - tripping signals (S) of the protection arrangement (6) are detected,

   **characterized in that**

   - at the start of a test of a protection arrangement (6) the output digital current and voltage signals (J', U') are first of all successively buffer-stored,
   - once a predetermined database of buffer-stored digital current and voltage signals (Jz, Uz) has been achieved, the respective oldest buffer-stored digital current and voltage signals (Jz, Uz) are read cyclically and are supplied to the protection arrangement (6) to be tested, and more recent output digital current and voltage signals (J', U') are subsequently buffer-stored, and
   - when a tripping signal (S) occurs, data-processing techniques are used to output network-fault-specific digital current and voltage signals (J', U') and the respective oldest buffer-stored digital current and voltage signals (Jz, Uz) are still read cyclically, and the network-fault-specific digital current and voltage signals (J', U') are each buffer-stored after they have been output.

2. Method according to Claim 1,
   **characterized in that**

   - the predetermined database of digital current and voltage signals (Jz, Uz) which have been buffer-stored on a cyclic basis is determined taking account of the cycle duration with respect to the intrinsic operating time (T1s) of switches in which the protection arrangements (6) to be tested are intended to be used.

3. Method according to Claim 1 or 2,
   **characterized in that**

   - the buffer-stored digital current and voltage signals (Iz, Uz) are read at a time interval ($\Delta$t) which corresponds to the time period required for in each case outputting further digital current and voltage signals (J', U') in the test state when there is no tripping signal.

4. Method according to Claim 1 or 2,
   **characterized in that**

   - the buffer-stored digital current and voltage signals (Jz, Uz) are read at a time interval ($\Delta$t) which is greater than the time period required for in each case outputting further digital current and voltage signals (J', U') in the test state when there is no tripping signal.

5. Arrangement for testing digital protection arrangements having

   - a data processing system (1) which models, in the form of a network model, the current and voltage response of a power supply network, with digital current and voltage signals (J', U') being output on a cyclic basis, and
   - a converter device (10), which is arranged downstream from the data processing system (1), forms corresponding currents and voltages (J, U) froms the digital current and voltage signals (J', U') and supplies these to a protection arrangement (6) to be tested,

   **characterized in that**

   - the data processing system (1) has an associated buffer store (5) in which the output digital current and voltage signals (J', U') are initially buffer-stored successively during the test process, and

- when a predetermined database of buffer-stored digital current and voltage signals (Jz, Uz) is reached, the respective oldest buffer-stored digital current and voltage signals (Jz, Uz) are read cyclically and are supplied to the protection arrangement (6) to be tested, and more recent output digital current and voltage signals (J', U') are subsequently buffer-stored, and

- the protection arrangement (6) to be tested has an associated recording arrangement (13) which, when a tripping signal (S) for the protection arrangment (6) to be tested occurs, causes the data processing system (1) to output network-fault-specific digital current and voltage signals (I', U') .

6. Arrangement according to Claim 5, **characterized in that**

- the buffer store (5) has a memory capacity such that it is possible to buffer-store all the current and voltage signals (J', U') which are output in a test state when there is no tripping signal during a time period which corresponds to the intrinsic operating time (T1s) of switches which are intended to interact with the protection arrangment (6) to be tested.

7. Arrangement according to Claim 5 or 6 **characterized in that**

- the buffer store is a ring buffer (5).


**Revendications**

1. Procédé permettant de tester des dispositifs numériques de protection dans lequel

- on reproduit par une technique informatique le comportement en courant et en tension d'un réseau d'alimentation en énergie en émettant en cadence des signaux (J', U') numériques de courant et de tension,
- on forme les courants (J) et les tensions (U) correspondants à partir des signaux (J', U') numériques de courant et de tension, et on les envoie à un dispositif (6) de protection à tester, et
- on relève des signaux (S) de déclenchement du dispositif (6) de protection,

    **caractérisé en ce que**

- au début du test d'un dispositif (6) de protection, on mémorise intermédiairement d'abord successivement les signaux (J', U') numériques de courant et de tension émis,

- après qu'une persistance donnée à l'avance de signaux (Jz, Uz) numériques de courant et de tension mémorisés intermédiairement a été atteinte, on lit en cadence les signaux (Jz, Uz) numériques de courant et de tension mémorisés intermédiairement qui sont respectivement les plus vieux et on les envoie au dispositif (6) de protection à tester et on remémorise intermédiairement les signaux (J', U') numériques de courant et de tension émis le plus récemment, et

- s'il se produit un signal (S) de déclenchement, on émet par la technique informatique des signaux (J', U') numériques de courant et de tension spécifiques à un défaut du réseau et en outre on lit en cadence les signaux (Jz, Uz) numériques de courant et de tension mémorisés intermédiairement les plus vieux respectivement et on mémorise intermédiairement respectivement après leur émission, les signaux (J', U') numériques de courant et de tension spécifiques au défaut du réseau.

2. Procédé suivant la revendication 1, **caractérisé en ce que**

- on détermine la persistance donnée à l'avance de signaux (Jz, Uz) numériques de courant et de tension mémorisés intermédiairement en cadence, en tenant compte de la durée de cadencement, compte tenu du temps (Tls) propre de commutateurs pour lesquels les dispositifs (6) de protection à tester doivent venir en utilisation.

3. Procédé suivant la revendication 1 ou 2, **caractérisé en ce que**

- on effectue la lecture des signaux (Jz, Uz) numériques de courant et de tension mémorisés intermédiairement dans un laps (Δt) de temps qui correspond pour un état de test exempt de signal de déclenchement à la durée nécessaire à l'émission respectivement d'autres signaux (J', U') numériques de courant et de tension.

4. Procédé suivant la revendication 1 ou 2, **caractérisé en ce que**

- on effectue la lecture des signaux (Jz, Uz) numériques de courant et de tension mémorisés intermédiairement dans un laps de temps (Δt) qui est supérieur à la durée, pour un état de test exempt de signal de déclenchement, qui est nécessaire à l'émission respectivement d'autres signaux (J', U') numériques de courant et de tension.

**5.** Configuration permettant de tester des dispositifs numériques de protection comprenant

- un système (1) informatique qui reproduit sous la forme d'un modèle de réseau, le comportement en courant et en tension d'un réseau d'alimentation en énergie en émettant en cadence des signaux (J', U') numériques de courant et de tension, et
- un dispositif (10) convertisseur, monté en aval du système (1) informatique, qui forme des courants et des tensions (J, U) correspondants à partir des signaux (J', U') numériques de courant et de tension et qui les envoie à un dispositif (6) de protection à tester,

  **caractérisée en ce que**

- il est associé au système (1) informatique une mémoire (5) intermédiaire dans laquelle il est d'abord mémorisé intermédiairement en succession les signaux (J', U') numériques de courant et de tension émis pendant l'opération de test, et
- après qu'une persistance donnée à l'avance de signaux (Jz, Uz) numériques de courant et de tension mémorisés intermédiairement a été atteinte, on lit en cadence les signaux (Jz, Uz) numériques de courant et de tension mémorisés intermédiairement qui sont respectivement les plus vieux et on les envoie au dispositif (6) de protection à tester et on remémorise intermédiairement les signaux (J', U') numériques de courant et de tension émis le plus récemment, et
- il est associé au dispositif (6) de protection à tester un dispositif (13) d'enregistrement qui, lorsqu'il se produit un signal (S) de déclenchement du dispositif (6) de protection à tester, fait que le système (1) informatique émet des signaux (I', U') numériques de courant et de tension spécifiques à un défaut du réseau.

**6.** Configuration suivant la revendication 5, **caractérisée en ce que**

- la mémoire (5) intermédiaire a une capacité de mémoire telle que tous les signaux (J', U') de courant et de tension émis à l'état de test exempt de signal de déclenchement pendant une durée correspondant au temps (Tls) propre de commutateurs prévus pour coopérer avec le dispositif (6) de protection à tester peuvent être mémorisés intermédiairement.

**7.** Configuration suivant la revendication 5 ou 6, **caractérisée en ce que**

- la mémoire intermédiaire est une mémoire tampon (5) en anneau.

Fig 1

Fig 2